# NOUVEAU FASCICULE DE BREVET EUROPEEN

(11) **EP 1 035 777 B2**
(45) Date de publication et mention de la décision concernant l'opposition: **17.10.2012**
(45) Mention de la délivrance du brevet: 31.08.2005
(21) Numéro de dépôt: 98956985.0
(22) Date de dépôt: 30.11.1998
(51) Int. Cl.: A23C 11/10, A23L 1/105

(54) **PREPARATION DE PRODUITS ALIMENTAIRES PAR FERMENTATION DE JUS DE SOJA PAR STREPTOCOCCUS THERMOPHILUS**
HERSTELLUNG VON NAHRUNGSMITTELN DURCH FERMENTIERUNG VON SOJAMILCH MIT STREPTOCOCCUS THERMOPHILUS
METHOD FOR PREPARING FOOD PRODUCTS BY FERMENTING SOY MILK WITH STREPTOCOCCUS THERMOPHILUS

(30) Priorité: 28.11.1997 FR 9715000
(43) Date de publication de la demande: 20.09.2000
(73) Titulaire: COMPAGNIE GERVAIS DANONE, 75009 Paris (FR)
(72) Inventeur: BOUFASSA, Corinne, F-91430 Igny (FR); TOURANCHEAU, Myriam, F-91120 Palaiseau (FR)
(74) Mandataire: Vialle-Presles, Marie José
(86) Numéro de dépôt international: PCT/FR1998/002569
(87) Numéro de publication internationale: WO 1999/027795

(56) Documents cités:
- EP-A- 0 111 420
- EP-A- 0 415 941
- EP-A- 0 622 024
- DE-A- 2 406 600
- DATABASE WPI Section Ch, Week 9402 Derwent Publications Ltd., London, GB; Class D13, AN 94-014011 XP002075502 & KR 9 305 198 B (KOREA FOOD RES INST)
- K. SHIRAI: "Production of a yogurt-like product from plant foodstuffs and whey" JOURNAL OF THE SCIENCE OF FOOD AND AGRICULTURE., vol. 59, 1992, pages 199-204, XP000292149 BARKING GB
- ANKENMAN GRANATA L ET AL: "IMPROVED ACID FLAVOR AND VOLATILE COMPOUND PRODUCTION IN A HIGH PROTEIN AND FIBER SOYMILK YOGHURT-LIKE PRODUCT" JOURNAL OF FOOD SCIENCE, vol. 61, no. 2, 1 mars 1996, pages 331-336, XP000589501
- MURTI T W ET AL: "BACTERIAL GROWTH AND VOLATILE COMPOUNDS IN YOGHURT-TYPE PRODUCTS FROM SOYMILK CONTAINING BIFIDOBACTERIUM SSP" 1 janvier 1993 , JOURNAL OF FOOD SCIENCE, VOL. 58, NR. 1, PAGE(S) 153 - 157 XP000356108 voir page 153
- CHEMICAL ABSTRACTS, vol. 106, no. 5, 2 février 1987 Columbus, Ohio, US; abstract no. 31611, XP002075501 & JP 61 044450 B (KIBUN CO)

## Description

### Streptococcus thermophilus.

L'Invention est relative à des produits fermentés à base de matières premières végétales.

Il est connu d'utiliser des matières premières végétales, en particulier des céréales, en tant que substituts ou compléments de matières premières d'origine laitière dans la fabrication de produits alimentaires fermentés, dans le but d'associer les propriétés bénéfiques de ces produits végétaux à celles des ferments lactiques.

Par exemple, la Demande EP 0 622 024 décrit un produit destiné à l'alimentation infantile, constitué de 95% de yoghourt et de 5% d'un mélange de bouillie de céréales (avoine, riz, et blé) et d'extrait de soja, préalablement pasteurisé, puis fermenté par *Bifidobacterium infantis* et éventuellement *Streptococcus thermophilus,* jusqu'à un pH d'environ 4,6 à 4,7. Il est indiqué que ce supplément fermenté améliore la valeur nutritionnelle et la digestibilité du yoghourt, en apportant des nutriments essentiels à la croissance des jeunes enfants sous une forme directement assimilable, et qu'en outre la présence de l'extrait de soja favorise l'activité fermentaire de *Bifidobacterium infantis*, et améliore sa viabilité. Cependant, ce document ne donne aucune information précise sur la durée de conservation du supplément fermenté, ni sur celle du produit fini (supplément + yoghourt), ni sur le taux effectif de survie des bactéries dans le supplément fermenté ou dans le produit final.

La Demande EP 0 568 530 décrit un produit préparé à partir de son d'avoine, mélangé à de l'eau et gélifié par un traitement thermique à 100°C pendant 20 min., puis fermenté par des bactéries lactiques. Le produit final obtenu est riche en fibres (β-glucanes), provenant du son d'avoine, et contient des lactobacilles vivants (10⁵ à 10⁸ UFC/g). Ce document indique également que le produit obtenu peut être conservé pendant plus de 2 semaines ; la teneur en acide lactique augmente pendant le stockage.

La Demande EP 0 415 941 décrit un produit liquide destiné à l'alimentation entérale par tube, ou à la préparation d'une boisson diététique. Ce produit est préparé à partir de farine d'avoine hydrolysée par une α-amylase et une β-glucanase, éventuellement additionnée de farine de soja pour la supplémenter en protéines et en matières grasses, puis fermentée par des lactobacilles, en particulier *Lactobacillus reuterii*. Le produit liquide obtenu contient des lactobacilles viables, et conserve ses propriétés pendant 8 jours environ.

Le brevet KR 9305198 décrit un lait fermenté préparé en fermentant séparément par un mélange de *Lactobacillus bulgaricus* et de *Streptococcus thermophilus* (i) un hydrolysat de riz obtenu en traitant un mélange de riz et d'eau par une α-amylase et une gluco-amylase à 50-60°C pendant 1 à 2 heures, qui fermenté pendant 15 à 30 heures, et (ii) un jus de soja ou d'une solution de protéines de soja, qui est fermenté pendant 25 à 45 heures. Ce document indique que le lait fermenté obtenu par mélange des bouillons fermentés de riz et de soja, présente un bon goût, une bonne saveur et une bonne couleur, mais ne donne aucune indication quant à la conservation de ces propriétés au cours du stockage du produit.

Le principal problème qui se pose, dans la fabrication de ce type de produits est de concilier, pendant la fabrication, le conditionnement et le stockage, la survie la plus élevée possible des ferments lactiques, et la conservation des qualités organoleptiques du produit. Par exemple, la post-acidification décrite dans la Demande EP 0 568 530, qui témoigne de la viabilité des lactobacilles, peut constituer un inconvénient dans la mesure où elle entraîne une modification du goût du produit qui n'est pas forcément appréciée des consommateurs.

La présente Invention a pour but l'obtention de produits alimentaires à base de matières premières d'origine végétale fermentées par des bactéries lactiques, capables de conserver à l'issue du conditionnement et du stockage, à la fois un taux de viabilité élevé des ferments lactiques, et des qualités organoleptiques intactes.

Les Inventeurs ont constaté que certains ferments lactiques, tels que *Streptococcus thermophilus*, présentent, lorsqu'ils sont utilisés pour fermenter des matières premières d'origine végétale, une post-acidification réduite tout en conservant une croissance et une viabilité suffisantes. Ces ferments sont donc particulièrement bien adaptés à l'obtention des produits alimentaires possédant les propriétés définies ci-dessus. Les inventeurs ont également constaté que l'utilisation en tant que matière première d'origine végétale, d'un mélange à base de jus de soja et d'un hydrolysat de céréales par une β-amylase et une α-amylase, et/ou de lait d'amande, fournissait un substrat particulièrement favorable à une bonne croissance de ces ferments, et permettait de conduire la fermentation dans des conditions optimales.

La présente Invention a pour objet un procédé d'obtention d'un produit alimentaire par fermentation lactique de matières premières d'origine végétale, lequel procédé est caractérisé en ce qu'il comprend :
- la préparation d'un mélange comprenant :
   a) du jus de soja, et
   b) un hydrolysat d'au moins une céréale par une β-amylase et une α-amylase, et/ou du lait d'amande,
- la fermentation du mélange par un ferment lactique comprenant au moins une souche de *Streptococcus thermophilus*.

Du jus de soja utilisable pour la mise en oeuvre du procédé conforme à la présente invention est par exemple la préparation connue sous le nom de *« tonyu »* obtenue à partir de graines entières de soja, et qui fait l'objet d'une norme AFNOR (NF V 29-001). Brièvement, pour obtenir le *tonyu*, les graines de soja sont dépelliculées, puis mélangées avec de l'eau et broyées à chaud (>85°C). Le broyat est décanté de façon à séparer le résidu solide, dénommé « *okara »* du jus de soja qui constitue le *tonyu*. Le *tonyu* est ensuite stérilisé puis refroidi à 4°C.

L'hydrolysat de céréales utilisé pour la mise en oeuvre du procédé conforme à la présente invention est obtenu par exemple à partir d'une farine ou de flocons de céréales, hydrolysés, de manière connue en elle-même, par une β-amylase et une α-amylase. Si l'on souhaite obtenir un produit final riche en fibres, on peut utiliser un hydrolysat obtenu à partir d'une farine ou de flocons de céréale complète. On peut avantageusement utiliser un hydrolysat de riz, d'orge, de blé, ou d'avoine, ou un mélange de ceux-ci. En particulier, l'utilisation d'un hydrolysat d'avoine permet d'obtenir un produit plus riche en β-glucanes. A titre d'exemple, un hydrolysat d'avoine utilisable dans le cadre de la présente invention est décrit dans la demande PCT WO 95/07628.

Pour des raisons de commodité, l'hydrolysat de céréales peut se présenter sous forme de poudre ; on peut alors soit additionner directement celle-ci au jus de soja, soit reconstituer, préalablement au mélange avec le jus de soja, un hydrolysat liquide (également dénommé ci-après « jus de céréales hydrolysées »), comprenant de préférence entre 5 et 20% en poids de matière sèche, par addition d'une quantité d'eau appropriée.

Tout ou partie du jus de céréales hydrolysées peut être remplacé par du lait d'amande.

L'utilisation du mélange jus de soja/constituant b) assure d'excellentes conditions de fermentation, qui permettent la formation d'un réseau régulier entre les molécules des différents constituants du produit, et lui confèrent une texture lisse et homogène.

Avantageusement, pour obtenir un produit final optimal tant sur le plan des qualités organoleptiques que de la texture, le mélange jus de soja/constituant b) comprend entre 2,5% et 9%, et de préférence environ 5% (en poids) de matière sèche provenant du jus de soja. Ces dernières proportions donnent une matière première ayant des teneurs en macronutriments (protéines, lipides, glucides) équivalentes à celles du lait demi-écrémé.

Si on le souhaite, on peut également ajouter au mélange des agents de texture, parmi ceux classiquement utilisés dans la fabrication des produits alimentaires, en particulier des produits laitiers fermentés. Par exemple, on peut utiliser de l'amidon, dans des proportions de 2 à 3% en poids.

On peut également ajouter un ou plusieurs antioxydants, par exemple de la vitamine E, pour prévenir l'oxydation des acides gras polyinsaturés présents dans les matières premières. Si on souhaite augmenter la teneur en fibres du produit, il est également possible d'ajouter à ce stade des fibres alimentaires, par exemple des fructooligosaccharides (FOS).

Après incorporation des différents constituants, le mélange est laissé sous agitation (en général pendant 30 min. à 1 heure), afin de réhydrater les composants apportés sous forme solide, puis stérilisé (par exemple à 130°C pendant 2 à 20 s). On peut remplacer l'étape de stérilisation par un traitement thermique de pasteurisation (par exemple à 95°C, pendant 5 min. à 10 min.) ou par une upérisation par injection directe de vapeur dans le produit (par exemple à 135°C, pendant 3 s).

Préalablement à l'inoculation par les ferments lactiques, le mélange est refroidi à une température de 25°C à 45°C environ.

Il est ensuite ensemencé avec un inoculum de bactéries lactiques, à une concentration bactérienne initiale d'au moins 10⁴ à 10⁵ UFC/g dans le milieu fermentaire.

Les Inventeurs ont en outre constaté que certaines souches de *Streptococcus thermophilus* tout en n'induisant qu'une post-acidification très faible, conservaient une excellente viabilité. Ces souches, dénommées « souches à post-acidification réduite » conviennent tout particulièrement pour la mise en oeuvre de la présente invention ; elles peuvent être sélectionnées sur la base de leurs caractéristiques de viabilité et de post-acidification, après culture sur un mélange 50/50 (v/v) des constituants a) et b) définis ci-dessus, et conservation et à une température d'environ 10°C.

Avantageusement, on choisira une souche présentant, dans ces conditions, les caractéristiques suivantes :
- la population bactérienne, au bout de 28 jours, (pour une inoculation initiale d'environ 10⁴ à 10⁵ UFC/g), est d'au moins 10⁶ UFC/g, de préférence entre 10⁷ et 10⁹ UFC/g ;
- la différence entre le pH de décaillage et le pH au bout de 28 jours (ΔpH J₀ - J₂₈) est inférieure ou égale à 0,2.

Une souche de *Streptococcus thermophilus* utilisable pour la mise en oeuvre du procédé conforme à l'invention est par exemple la souche déposée, selon le Traité de Budapest, le 30 décembre 1994, auprès de la CNCM (Collection Nationale de Cultures de Microorganismes) tenue par l'Institut Pasteur, 25 rue du Docteur Roux. à Paris, sous le numéro I-1520.

Pour la mise en oeuvre du procédé conforme à l'invention, il est également possible d'associer la ou les souches de *Streptococcus thermophilus* avec au moins une souche de bactérie lactique choisie dans le groupe constitué par *Bifidobacterium* ssp., *Lactobacillus* ssp. (en particulier *L. plantarum, L. pentosus, L. bulgaricus, L. casei, L. acidophilus*), *Lactococcus* ssp., *Pediococcus* ssp.. La souche ou les souches associées sont choisies en fonction de la saveur que l'on souhaite donner au produit final. Selon la souche associée, on peut observer une post-acidification plus importante que celle observée avec *Streptococcus thermophilus* seul ; cependant, le ΔpH J₀ - J₂₈ demeure inférieur ou égal à 0,6.

Suivant le ferment utilisé, la fermentation est conduite pendant 3 à 24 heures, et arrêtée à un pH compris entre 4 et 5.

A la fin de la fermentation, le produit peut être lissé, pour lui donner la texture souhaitée. Par exemple, si l'on souhaite obtenir une boisson, le lissage est accentué pour augmenter le cisaillement et obtenir une texture fluide. Des agents de stabilisation peuvent également être ajoutés.

Le produit est ensuite refroidi à 20°C. On peut, si on le souhaite, ajouter du sucre, par exemple sous forme d'un sirop de sucre (saccharose, fructose, sucre de canne, miel), des arômes, des fruits (préparation de fruits, concentré, compote, jus, sirop), préalablement au conditionnement et au refroidissement à la température de conservation. Le produit peut être conservé à une température comprise de préférence entre 4°C et 15°C.

La présente invention a également pour objet les produits fermentés à base de matières premières végétales susceptible d'être obtenus par le procédé conforme à l'invention, tel que défini ci-dessus.

Par exemple, des produits conformes à l'invention, obtenus par fermentation avec une ou plusieurs souches de *Streptococcus thermophilus* à post-acidification réduite, éventuellement associées avec *Bifidobacterium*, présentent les caractéristiques suivantes, après 28 jours de conservation à une température d'environ 10°C :
- ils contiennent au moins 10⁶, de préférence entre 10⁷ et 10⁹ UFC/ml de *Streptococcus thermophilus* ;
- la différence entre leur pH en fin de fermentation, et leur pH après 28 jours de conservation à une température d'environ 10°C est inférieure à 0,2 unités pH.

Il apparaît donc que les ferments lactiques présents dans les produits obtenus conformément à l'invention conservent un taux de survie élevé, sans que ceci entraîne une diminution des qualités organoleptiques du produit, qui résulterait en particulier d'une post-acidification excessive.

Ces caractéristiques permettent en particulier une industrialisation facile, dans la mesure où le produit fini supporte des stockages tampon et des temps de conditionnement longs, sans dégradation de ses qualités.

La présente Invention sera mieux comprise à l'aide du complément de description qui va suivre, qui se réfère à des exemples illustrant la préparation et les propriétés de produits fermentés conformes à l'Invention.

### EXEMPLE 1 : VIABILITE ET PROPRIETES DE POST-ACIDIFICATION DE STREPTOCOCCUS THERMOPHILUS ; SELECTION D'UNE SOUCHE DE STREPTOCOCCUS THERMOPHIL US A POST-ACIDIFICATION REDUITE.

### Viabilité et post-acidification de Streptococcus thermophilus sur substrat d'origine végétale

On reconstitue un jus d'avoine par mélange de poudre d'avoine hydrolysée (10% en poids du jus reconstitué) avec de l'eau. On mélange ce jus d'avoine reconstitué avec un poids égal de jus de soja. Le mélange est stérilisé puis refroidi à 42°C.

Pour tester la viabilité et la post-acidification dans le produit fermenté, le mélange est ensemencé avec 10⁵ UFC/g de la souche de *Streptococcus thermophilus* à tester.

Après fermentation à 38°C pendant 6 à 8 heures, le produit est refroidi à 20°C, et son pH est mesuré (pH de décaillage à J₀). Le produit est ensuite conservé à une température de 10°C pendant 28 jours.

Les résultats sont illustrés par le tableau I ci-après.

**TABLEAU I**

| *Souche de Streptococcus thermophilus* | pH décaillage (J₀) | Post-acidification (pH J₂₈) | Δ pH | Population bactérienne (J₂₈) (UCF/g) |
|---|---|---|---|---|
| CNCM I-1520 | 4,77 | 4,72 | -0,05 | 7,5 x 10⁷ |
| ST 1 | 4,76 | 4,52 | -0,24 | 1 x 10⁸ |
| ST 2 | 4,74 | 4,62 | -0,12 | 4 x 10⁵ |

### Viabilité et post-acidification de Streptococcus thermophilus sur lait

A titre de comparaison, les mêmes expérimentations que ci-dessus ont été effectuées en utilisant comme substrat de fermentation, du lait additionné d'extrait de levure (2 g/l d'autolysat de levure). Les résultats sont illustrés par le tableau II ci-dessous.

**TABLEAU II**

| *Souche de Streptococcus thermophilus* | pH décaillage (J₀) | Post-acidification (pH J₂₈) | Δ pH | Population bactérienne (J₂₈) (UCF/g) |
|---|---|---|---|---|
| CNCM I-1520 | 4,67 | 4,09 | -0,58 | 6 x 10⁸ |
| ST 1 | 4,57 | 4,03 | -0,54 | 4,5 x 10⁸ |
| ST 2 | 4,62 | 4,09 | -0.53 | 4 x 10⁸ |

La post-acidification par les différentes souches de *Streptococcus thermophilus* est nettement plus importante dans le cas du lait que dans le cas d'un substrat d'origine végétale ; cette différence est particulièrement marquée dans le cas de la souche CNCM I-1520. Sur le substrat d'origine végétale, cette souche présente à la fois une post-acidification réduite et une bonne viabilité, ce qui la rend particulièrement bien adaptée pour la mise en oeuvre du procédé conforme à l'invention.

### Viabilité et post-acidification de Streptococcus thermophilus associé à Bifidobacterium, sur substrat d'origine végétale

Les mêmes expérimentations sur substrat d'origine végétale que ci-dessus ont été effectuées en ensemençant le substrat avec 10⁵ UFC/g de la souche de *Streptococcus thermophilus* I-1520, et 10⁶ UFC/g de *Bifidobacterium*. Les résultats sont illustrés par le tableau III ci-dessous.

**TABLEAU III**

| | pH décaillage (J₀) | Post-acidification (pH J₂₈) | Δ pH | Population bactérienne (J₂₈) (UCF/g) | |
|---|---|---|---|---|---|
| | | | | CNCM I-1520 | Bifidobacterium |
| CNCM I-1520 + Bifidobacterium | 4,76 | 4,71 | -0,05 | 1 x 10⁸ | 5 x 10⁷ |

Ces résultats montrent que l'addition de *Bifidobacterium* n'augmente pas la post-acidification, et n'influe pas sur la viabilité de *Streptococcus thermophilus* (ou l'améliore légèrement).

### EXEMPLE 2 : FERMENTATION D'UN MÉLANGE AVOINE/SOJA PAR UN FERMENT S.THERMOPHILUS/ BIFIDOBACTERIUM

On reconstitue 48,90 kg de jus d'avoine hydrolysée en mélangeant 4,89 kg de poudre d'avoine hydrolysée dans 44,01 kg d'eau. On mélange ce jus d'avoine reconstitué avec 48,90 kg de jus de soja, et 2,50 kg d'amidon.

Le mélange avoine/soja à 50/50 donne une matière première ayant des teneurs en macronutriments équivalentes à celles du lait demi-écrémé (soit 26% de l'énergie apportée par les protéines, 36% par les lipides et 38% par les glucides).

On chauffe le mélange jusqu'à 95°C puis on monte la température à 130°C pendant quelques secondes pour stériliser le mélange. Après refroidissement à 42°C, on ensemence le mélange avec un ferment contenant 10⁵ à 5 × 10⁶ UFC/g de *Streptococcus thermophilus* (I-1520) et 10⁶ à 10⁷ UFC/g de *Bifidobacterium*.

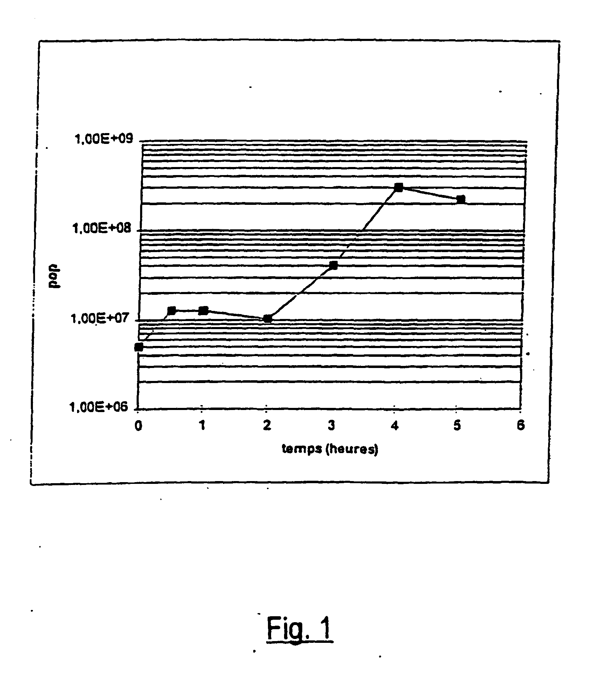

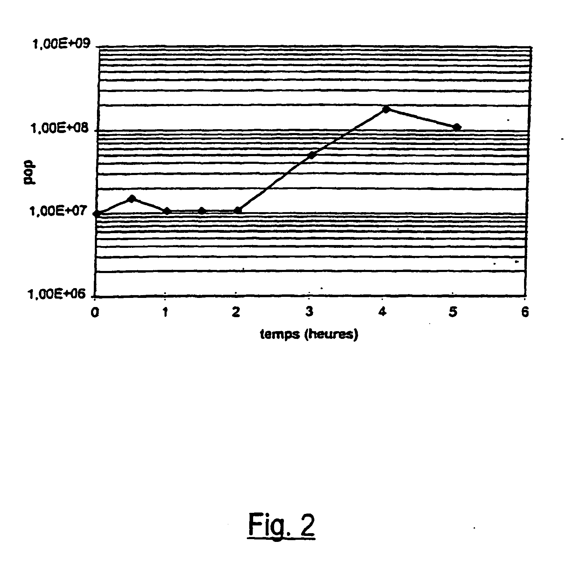

Les figures 1 et 2 représentent les courbes de croissance respectives de la souche de *S. thermophilus* CNCM I-1520, et de *Bifidus* spp., au cours de la fermentation du mélange après ensemencement avec 4 × 10⁶ UFC/g de *S. thermophilus*, et 10⁷ UFC/g de *Bifidus* spp (en abscisse : temps de fermentation ; en ordonnée : population bactérienne).

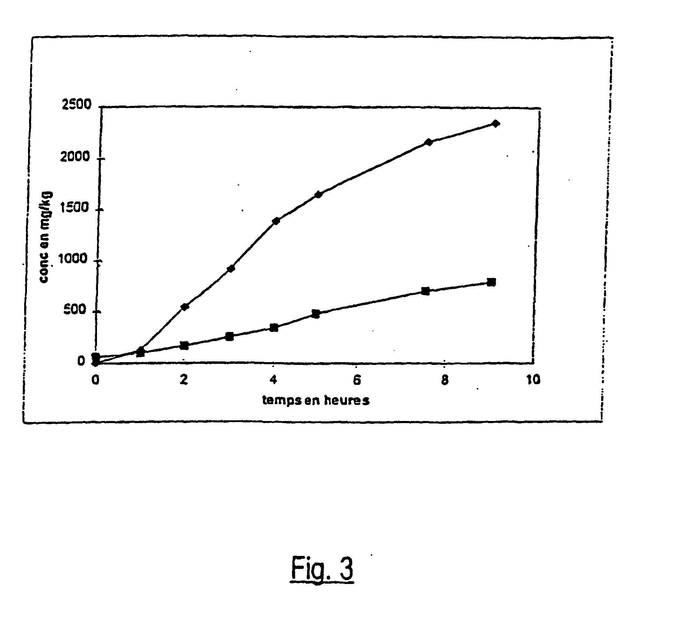

La figure 3 représente l'acidification du mélange au cours de la fermentation après ensemencement avec 4 × 10⁶ UFC/g de *S. thermophilus,* et 10' UFC/g de *Bifidus* spp. En abscisse : temps de fermentation ; en ordonnée : concentration en acide lactique (◆) et en acide acétique (■).

On conduit la fermentation à 38°C pendant 6 à 8 heures jusqu'à atteindre un pH compris entre 4,7 et 4,8. Le produit est alors décaillé à 20°C puis lissé sur une vanne de lissage à un débit de 140 à 240 l/heure. Le produit est ensuite conditionné en pots de 125 g.

Le produit obtenu est lisse et souple, de couleur jaune pâle ; il ressemble à un yoghourt brassé, il a une texture onctueuse, très légère en bouche. Le goût frais et léger rappelle l'avoine ; les caractéristiques gustatives du soja sont peu perceptibles. Il contient 0,3% (en poids) de β-glucanes, et ne comprend ni cholestérol ni lactose. Il contient des acides gras polyinsaturés (acide linoléique C18:2 majoritaire, et α-linolénique C18:3).

Ce produit est stable et peut être conservé au moins 28 jours à une température comprise entre 4 et 10°C.

Le produit a été conservé à 10°C pendant 28 jours. On n'a observé ni exsudation, ni décantation ou perte de texture.

Les mesures de pH faites à J₁ et J₂₈ montrent un ΔpH de 0,13. A J₇ on dénombre 3 × 10⁸ UFC/g streptocoques et 1,1 × 10⁸ UFC/g bifidobactéries. A J₂₈, la population est de 10⁸ UFC/g streptocoques et 8,5 × 10⁷ UFC/g bifidobactéries.

### EXEMPLE 3 : MÉLANGE AVOINE/SOJA ; FERMENT S. THERMOPHILUS/BIFIDOBACTERIUM ; PRODUIT AROMATISÉ AUX FRUITS

On procède comme décrit dans l'exemple 2, et juste avant le conditionnement on réalise un mélange comportant 70 à 75% (en poids) de masse blanche, 24% (en poids) de préparation de fruits et 1 à 6% (en poids) de sirop de sucre suivant la variété de fruit utilisée. Les préparations de fruits pruneau, figue, mangue, cassis et cerise peuvent être citées à titre d'exemple, mais d'autres sont utilisables. Des essais de conservation des produits sont faits jusqu'à 28 jours et 4 et à 10°C. Il y a peu de différence entre une conservation à 4°C ou une conservation à 10°C. Le ΔpHₘₐₓ dans les 2 cas est de 0,08.

### EXEMPLE 4 : MÉLANGE AVOINE/SOJA ; FERMENT YOGHOURT

On procède comme décrit dans l'exemple 2, mais on ensemence le mélange de départ avec un ferment contenant *Streptococcus thermophilus* et *Lactobacillus bulgaricus* à un taux de 10⁵ à 10⁶ UFC/g. La fermentation est effectuée à 43°C pendant 5 à 6 heures jusqu'à atteindre un pH compris entre 4,5 et 5. Le produit présente une texture lisse et brillante et un goût de flocons d'avoine. Les suivis de pH montrent à J₂₈ un ΔpHₘₐₓ de 0,2.

### EXEMPLE 5 : MÉLANGE AVOINE/SOJA, FERMENT S.THERMOPHILUS/L. PLANTARUM.

On procède comme décrit dans l'exemple 2, mais on ensemence le mélange de départ avec un ferment contenant *Streptococcus thermophilus* 10⁵ à 10⁶ UFC/g et *Lactoacillùs plantarum* 10⁶ à 10⁷ UFC/g. Le mélange ensemencé est conditionné dans des pots de 125 g. La fermentation est effectuée à 38°C pendant 6 à 7 heures jusqu'à atteindre un pH compris entre 4,5 et 5. Le produit présente une texture plus légère à la cuillère mais il est plus texturé en bouche que celui de l'exemple 2 ; il est d'autre part plus aromatique et a un goût de crème. On dénombre 7,5 × 10⁸ UFC/g streptocoques et 6,5 × 10⁷UFC/g lactobacilles à J₂₈.

### EXEMPLE 6 : MÉLANGE AVOINE/SOJA ; FERMENT S. THERMOPHILUS/L. CASEI.

On procède comme décrit dans l'exemple 5, et on remplace *Lactobacillus plantarum* par *Lactobacillus casei*. La fermentation est arrêtée à un pH compris entre 4,5 et 5 au bout de 4 à 5 heures. Le produit est fluide, avec un goût typé. Les dénombrements montrent une population de streptocoques de 8 × 10⁸ UFC/g et 1 × 10⁸ UFC/g lactobacilles à J₂₈.

### EXEMPLE 7 : MÉLANGE AMANDE/SOJA; FERMENT S. THERMOPHILUS/L. CASEI/BIFIDOBACTERIUM.

On procède comme décrit dans l'exemple 2, mais on remplace le jus d'avoine hydrolysée reconstitué par un lait d'amande et on ensemence avec un ferment contenant *Streptococcus thermophilus* 10⁵ à 10⁶ UFC/g, *Lactobacillus casei* 10⁶ à 10⁷ UFC/g et *Bifidobacterium* à 10⁶ à 10⁷ UFC/g. Le produit est fermenté à 38°C pendant 4 à 5 heures. La fermentation est arrêtée à un pH compris entre 4,6 et 4,8. Le produit est de couleur blanche proche de celle du lait entier avec un goût d'amande typique, acidulé très agréable.

### EXEMPLE 8 : BOISSON : MÉLANGE AVOINE OU AMANDE OU RIZ/SOJA, FERMENT YOGHOURT

On mélange 1 l de jus d'avoine hydrolysée reconstitué ou 1 l de lait d'amande ou 1 l de jus de riz hydrolysé avec 1 l de jus de soja. Dans le cas des boissons, on ne met pas d'amidon dans le mélange de départ, mais on peut ajouter un agent de stabilisation à base de protéines et de maltodextrines de riz, dans le mélange avec jus de riz. Le procédé de l'exemple 2 est utilisé avec une fermentation conduite à 43°C pendant 5 à 15 heures. Elle est arrêtée à un pH compris entre 4,2 et 5,2 suivant les substrats de départ.

Les produits ainsi obtenus peuvent être aromatisés, ou mélangés avec des sirops de sucre (5 à 8% en poids) ou différents jus de fruits (25 à 30% en poids).

## Revendications

1. Procédé d'obtention d'un produit alimentaire par fermentation lactique de matières premières d'origine végétale, lequel procédé est **caractérisé en ce qu'**il comprend :
- la préparation d'un mélange comprenant :
a) du jus de soja, et
b) un hydrolysat d'au moins une céréale par une β-amylase et une α-amylase ; et/ou du lait d'amande,
- la fermentation du mélange par un ferment lactique comprenant au moins une souche de *Streptococcus thermophilus.*

2. Procédé selon la revendication 1, **caractérisé en ce que** le ferment lactique comprend au moins une souche de *Streptococcus thermophilus* à post-acidification réduite

3. Procédé selon une quelconque des revendications 1 ou 2 **caractérisé en ce que** l'on utilise au moins un hydrolysat d'une céréale choisie dans le groupe constitué par le riz, l'orge, le blé, et l'avoine.

4. Procédé selon une quelconque des revendications 1 à 3 **caractérisé en ce que** le mélange : jus de soja/constituant b) comprend entre 2,5 et 9%, et de préférence environ 5% en poids de matière sèche provenant du jus de soja.

5. Procédé selon une quelconque des revendications 1 à 4, **caractérisé en ce que** le ferment lactique comprend également au moins une souche de bactérie lactique choisie dans le groupe constitué par *Bifidobacterium* ssp., *Lactobacillus* ssp. *Lactococcus ssp., Pediococcus* ssp..

6. Produit fermenté à base de matières premières végétales, **caractérisé en ce qu'**il est susceptible d'être obtenu par un procédé selon une quelconque des revendications 1 à 5.

7. Produit fermenté selon la revendication 6, **caractérisé en ce qu'**il est susceptible d'être obtenu parun procédé selon la revendication 2, et **en ce que** :
- après 28 jours de conservation à une température d'environ 10°C, il contient au moins 10⁶, de préférence entre 10⁷ et 10⁹ UFC/ml de *Streptococcus thermophilus* ;
- la différence entre son pH en fin de fermentation et son pH après 28 jours de conservation à une température d'environ love est inférieure à 0,2 unités pH.

## Claims

1. Method of obtaining a food product by lactic fermentation of raw materials of plant origin, the method being **characterised in that** it comprises:
- preparing a mixture containing:
a) soya juice, and
b) a hydrolysate of at least one cereal by a β-amylase and an α-amylase; and/or almond milk,
- fermenting the mixture with a lactic ferment comprising at least one strain of *Streptococcus thermophilus.*

2. Process according to claim 1, **characterised in that** the lactic ferment comprises at least one strain of *Streptococcus thermophilus* with reduced post-acidification.

3. Process according to either of claims 1 or 2, **characterised in that** at least one hydrolysate of a cereal is used, selected from the group consisting of rice, barley, wheat and oats.

4. Process according to any one claims 1 to 3, **characterised in that** the mixture of soya juice/ingredient b) comprises between 2.5 and 9%, preferably about 5 wt.% of dry matter originating from the soya juice.

5. Process according to any one of claims 1 to 4, **characterised in that** the lactic ferment also comprises at least one strain of lactic bacteria selected from among *Bifobacterium ssp., Lactobacillus ssp., Lactococcus ssp., Pediococcis ssp.*

6. Fermented product based on plant raw materials, **characterised in that** it may be obtained by a process according to any one of claims 1 to 5.

7. Fermented product according to claim 6, **characterised in that** it may be obtained by a process according to claim 2, and **in that**:
- after 28 days' storage at a temperature of about 10°C it contains at least 10⁶ and preferably between 10⁷ and 10⁹ UFC/ml of *Streptococcus thermophilus;*
- the difference between its pH at the end of fermentation and its pH after 28 days' storage at a temperature of about 10°C is less than 0.2 pH units.

## Patentansprüche

1. Verfahren zur Herstellung eines Nahrungsmittelproduktes durch Milchsäurevergärung von Ausgangsmaterialien pflanzlichen Ursprings, wobei das Verfahren **dadurch gekennzeichnet ist, daß** es aufweist:
- Bereitung einer Mischung, welche umfaßt:
a) Sojasaft und
b) ein Hydrolysat von mindestens einem Getreide mittels einer β-Amylase und einer α-Amylase; und/oder Mandelmilch,
- wobei das Vergären der Mischung mit einem Lactoferment mindestens einen Stamm von *Streptococcus thermophilus* umfaßt.

2. Verfahren nach Anspruch 1, **dadurch gekennzeichnet, daß** das Lactoferment mindestens einen Stamm von *Streptococcus thermophilus* mit einer reduzierten Nachsäuerung umfaßt.

3. Verfahren nach einem der Ansprüche 1 oder 2, **dadurch gekennzeichnet, daß** mindestens ein Hydrolysat eines Getreides verwendet wird, das aus der Gruppe bestehend aus Reis, Gerste, Weizen und Hafer ausgewählt ist.

4. Verfahren nach einem der Ansprüche 1 bis 3, **dadurch gekennzeichnet, daß** die Mischung: Sojasaft/ Inhaltsstoff b) zwischen 2,5 und 9 Gew.-%, und bevorzugt ca. 5 Gew.-% Trockenmaterie aus Sojasaft aufweist.

5. Verfahren nach einem der Ansprüche 1 bis 4, **dadurch gekennzeichnet, daß** das Lactoferment auch mindestens einen Stamm von Lactobakterien umfaßt, der aus der Gruppe bestehend aus *Bifidobacterium ssp., Lactobacillus* ssp., *Lactococcus* ssp., *Pediococcus* ssp. ausgewählt ist.

6. Fermentiertes Produkt auf Basis von pflanzlichen Ausgangsstoffen, **dadurch gekennzeichnet, daß** es mit einem Verfahren nach einem der Ansprüche 1 bis 5 herstellbar ist.

7. Fermentiertes Produkt nach Anspruch 6, **dadurch gekennzeichnet, daß** es mit dem Verfahren nach Anspruch 2 herstellbar ist, und daß:
- es nach 28-tägiger Aufbewahrung bei einer Temperatur von ca. 10°C mindestens 10⁶, bevorzugt zwischen 10⁷ und 10⁹ UFC/ml *Streptococcus thermophilus* enthält;
- der Unterschied zwischen seinem pH-Wert nach beendetem Vergären und seinem pH-Wert nach 28-tägiger Aufbewahrung bei einer Temperatur von ca. 10°C weniger als 0,2 pH-Einheiten beträgt.
